# EUROPEAN PATENT SPECIFICATION

(11) **EP 1 406 423 B1**
(45) Date of publication and mention of the grant of the patent: **12.03.2008**
(21) Application number: 02784821.7
(22) Date of filing: 14.05.2002
(51) Int. Cl.: H04L 29/02

(54) **NETWORK STRUCTURE FOR ENCRYPTING OF MOBILE COMMUNICATION SYSTEM TERMINAL AND THE METHOD OF REALIZING IT**
NETZWERKSTRUKTUR ZUM VERSCHLÜSSELN EINES MOBILKOMMUNIKATIONSSYSTEMENDGERÄTS UND VERFAHREN ZU IHRER REALISIERUNG
STRUCTURE DE RESEAU POUR CRYPTER UN TERMINAL DE SYSTEME DE COMMUNICATION MOBILE ET PROCEDE DE REALISATION DE CETTE STRUCTURE

(30) Priority: 12.07.2001 CN 01120260
(43) Date of publication of application: 07.04.2004
(73) Proprietor: Huawei Technologies Co., Ltd., Guangdong, Shenzhen 518057 (CN)
(72) Inventor: ZHENG, Zhibin, Kefa Road, Shenzhen, Guangdong 518057 (CN)
(74) Representative: Mounteney, Simon James
(86) International application number: PCT/CN2002/000330
(87) International publication number: WO 2003/007569

(56) References cited:
- WO-A-00/02358
- WO-A-01/01644
- CN-A- 1 275 744
- DE-A- 4 408 035
- US-A- 5 657 390
- US-A1- 2001 016 907

## Description

### Field of the Technology

The invention relates generally to a network structure and an implementing method for ciphering in a mobile telecommunication system of Wideband Code Division Multiple Access (WCDMA), and more particularly to a suitable network structure and an implementing method for ciphering at the User Equipments of a mobile telecommunication system. It belongs to the confidentiality or security technical field of a mobile telecommunication system. The invention provides an end-to-end ciphering method that is different from the conventional ciphering method that is a symmetric confidentiality method between user equipments and access network side.

### Background of the Invention

In the third generation mobile telecommunication system WCDMA, the confidentiality is implemented at the User Equipment (UE) and the Radio Network Controller (RNC) of network side, i.e. at the access part of the system. In this way, information transmission security at the uplink and downlink between the user and the network access equipment are guaranteed, but it does not provide the information transmission security on the core network, which must be considered in another way. At present, the 3GPP (Third Generation Partnership Project) has not defined the information ciphering method and standard on the core network.

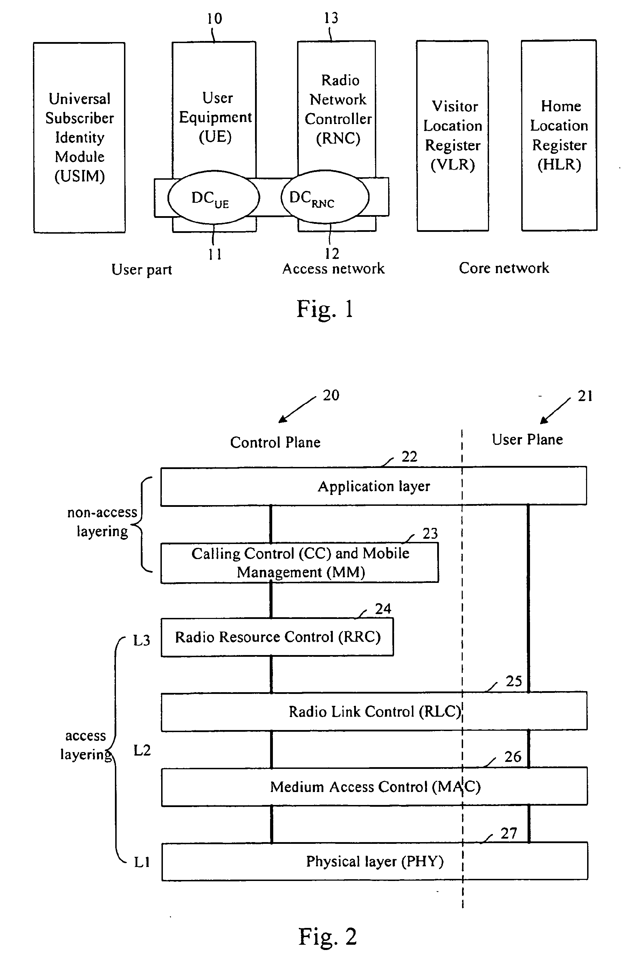

Fig. 1 shows the ciphering location on a network architecture recommended by the 3GPP, wherein the Data Ciphering (DC_{UE}) 11 of UE 10 and the Data Ciphering (DC_{RNC}) 12 of the RNC 13 represent data ciphering at UE and RNC respectively. It can be seen from Fig. 1 that the ciphering mode only provides a symmetric data ciphering between UE and base station, but does not provide an end-to-end data ciphering function between UE and UE.

The ciphering mode shown in Fig. 1 can be analyzed from the layer point of view. Fig. 2 shows a diagram of 3GPP network layering structure that is divided into layers at horizontal direction and planes at vertical direction. Along the horizontal direction, there are two main layers: the access layering and the non-access layering. The access layer includes the Physical layer (PHY) 27, i.e. L1, the Medium Access Control (MAC) layer 26 and Radio Link Control layer (RLC) 25, i.e. L2, and the Radio Resource Control layer (RRC) 24, i.e. L3. The non-access layer includes the application layer 22 and the Calling Control (CC) and Mobile Management (MM) layer 23. Along the vertical direction, there are two planes: the User Plane (U-Plane) 21 and the Control Plane (C-Plane) 20; the U-Plane only includes the Application layer 22, the RLC layer 25, the MAC layer 26 and the PHY layer 27.

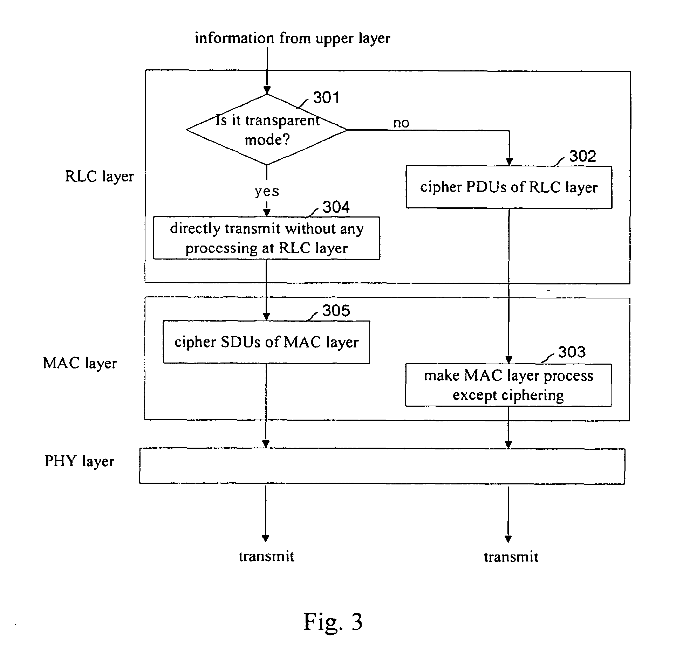

The ciphering function is implemented on the U-Plane 21 and the C-Plane 20 along the vertical direction, and in the L2 layer i.e. the RLC 25 or MAC 26 along the horizontal direction at the same time. Fig. 3 shows a flow chart of ciphering procedure in the RLC layer 25 or MAC layer 26, and is described in the following:
1.Step 301, information from the upper layer is sent to the RLC layer, and the information mode is detected in the RLC layer: a transparent mode or a non-transparent mode.
2.If the information is at the non-transparent mode, execute Step 302, the ciphering is made for the Protocol Data Units (PDUs) of the RLC layer, which are then transmitted to the MAC layer; and then execute Step 303, the MAC layer makes processing except ciphering for the ciphered PDUs, which are then transmitted to the PHY layer.
3.If the information is at the transparent mode, execute Step 304, the RLC layer transmits the information to the MAC layer without any processing, and then execute Step 305, the MAC layer makes ciphering for the Service Data Units (SDUs), which are then transmitted to the PHY layer.
4.The ciphered information is transmitted to the PHY layer and after being processed it is transmitted to the receiver.
5.The receiver makes deciphering with an opposite procedure of the above procedure.

In summary, at present in the third generation mobile telecommunication system WCDMA, the ciphering function is limited at the access link part, i.e. it is implemented only between UE of user side and RNC of network side, without an end-to-end ciphering. This situation leads to a certain degree of security defect in a mobile telecommunication system; this means that since the ciphering function cannot be extended to the core network at present, the transmission of user information is transparent in the core network, so the user information is easier to be intercepted or tapped. For the user information security, additional encryption techniques must be considered in the core network.

Besides, the present protocol requires that a unique standardized ciphering algorithm must be used in both the RNC and UE, and this will not satisfy some special users that require a special algorithm; this is a defect also for the present ciphering mechanism. WO 00/02358 discloses a method that is suitable for ciphering at a user equipment of a mobile communication system.

### Summary of the Invention

One objective of the invention is to provide a network structure that is suitable for ciphering at a UE in order to provide the end-to-end ciphering that has not been implemented at present.

Another objective of the invention is to provide a method that is suitable for ciphering at a UE based on the network structure mentioned above in order to provide a ciphering method used for end-to-end ciphering.

The objectives of the invention are implemented as follow. A suitable network structure for ciphering at a UE of a mobile telecommunication system is divided into two planes at the vertical direction: the User Plane (U-Plane) and the Control Plane (C-Plane). The layering structure of the C-Plane includes: the application layer, the Calling Control and Mobile Management layer for the non-access layering; and the Radio Resource Control (RRC) layer, the Radio Link Control (RLC) layer and Medium Access Control (MAC) layer, the Physical (PHY) layer for access layering. The layering structure of the U-Plane includes: the application layer, the Radio Link Control (RLC) layer, the Medium Access Control (MAC) layer, the Physical (PHY) layer and the Security Application Layer (SAL) that is a newly added layer and under the application layer. The SAL layer is used to make confidentiality (ciphering) for the user information coming from the application layer and is only used at the UE side, so the layering structure of network side is unchanged.

Said SAL provides ciphering algorithms and keys for ciphering the user information.

A method that is suitable for ciphering at a UE of a mobile telecommunication system is characterized that when a UE transmits information, the following steps comprise user information ciphering:
A. At the transmitting side, the traffic information of user is ciphered at a preset SAL that is a newly added layer under the application layer and the SAL provides the ciphering algorithms and keys;
B. Control information and the ciphered traffic information of user is ciphered and deciphered at the RLC layer or MAC layer;
C. At the receiving side, the traffic information of user is deciphered at SAL to recover to the original information.

Among them, said ciphering and deciphering operation in Step B can be further comprised:
B 1.The traffic information of user that is in first level ciphered state and C-Plane control information are ciphered with Data Ciphering DC_{UE} of the UE at the RLC layer or MAC layer, so the traffic information of user is in second level ciphered state;
B2.Above ciphered information is sent to the network side after having been processed at the PHY layer;
B3.The RNC at the network side corresponding to the transmitting side deciphers the ciphered control information and second level traffic information of user with the Data Ciphering DC_{RNC} of the RNC at the MAC layer or RLC layer, so now the control information is in deciphered state and the traffic information of user is in first level ciphered state;
B4.The traffic information of user that is in first level ciphered state and the control information of the C-Plane are sent to the RNC at the network side corresponding to the receiving side, and said RNC ciphers the control information of C-Plane and the traffic information of user that is in first level ciphered state to get second level ciphered traffic information with the Data Ciphering DC_{RNC} of said RNC at the RLC layer or MAC layer, and then sends them to corresponding receiving side;
B5.The UE at receiving side deciphers the ciphered control information of C-Plane and the second level ciphered traffic information of user in step of B4 with the Data Ciphering DC_{UE} of the UE at the RLC layer or MAC layer.

The invention proposes a network structure and an implementing method that are suitable for ciphering at UE, and the invention is based on the network layer structure defined by 3GPP. The key point of the invention is that a Security Application Layer (SAL) is added at the layering structure of the U-Plane. The added SAL is only at the UE side, so the layering structure of a network has not been changed.

Therefore, the invention does not affect the ciphering function of original network and C-Plane, and with the invention information transmitting from the source to the destination is cryptograph and is in data confidentiality, so the data is protected during the whole transmission procedure. The information can transmit safely and reliably without be intercepted or tapped even some nodes are damaged. The invention can be used on the network architecture defined by 3GPP.

### Brief Description of the Drawings

Fig. 1 shows a location diagram of ciphering information in the present 3GPP network architecture.
Fig. 2 shows a layering structure of the present 3GPP network architecture.
Fig. 3 shows a flowchart of present ciphering at the medium access control layer or radio link control layer of the 3GPP network architecture.
Fig. 4 shows a network layering structure of the invention for ciphering.
Fig. 5 shows a location diagram of the invention for user information ciphering and the control information ciphering in the 3GPP network architecture.
Fig. 6 shows an implementing procedure of an end-to-end ciphering of the invention.

### Embodiments of the Invention

The invention will be described in more detail, hereinafter, with reference to the drawings and embodiments.

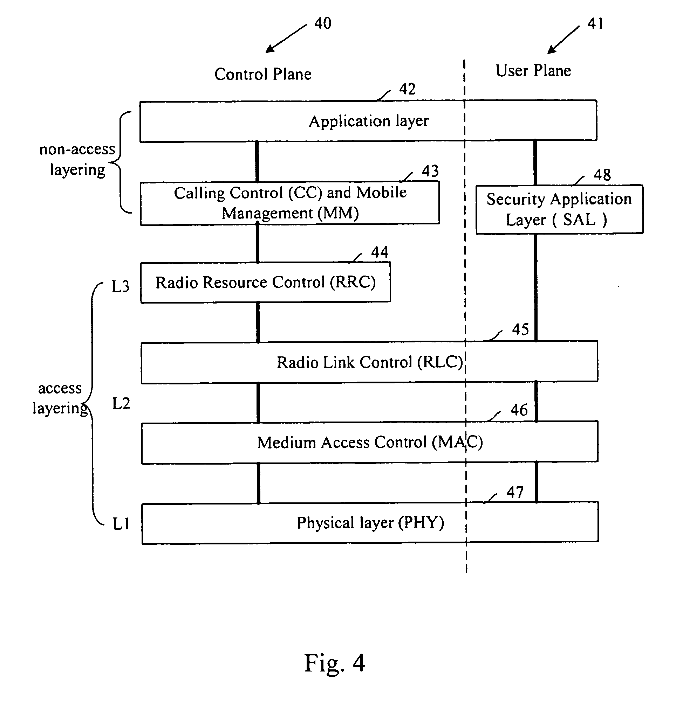

Fig. 4 shows a network structure of the invention for ciphering, which is suitable to a mobile communication system. In vertical direction, the network structure is divided into two planes: the User Plane (U-Plane) 41 and the Control Plane (C-Plane) 40. The layering structure of the C-Plane 40 includes the application layer 42, the Calling Control and Mobile Management layer 43 for non-access layering, and the Radio Resource Control layer (RRC) 44, i.e. L3, the RLC layer 45 and MAC layer 46, i.e. L2, and the PHY layer 47, i.e. L1, for access layering. The layering structure of the U-Plane includes the application layer 42, the RLC layer 45 and the MAC layer 46, i.e. L2, the PHY layer 47, i.e. L1 and the Security Application Layer (SAL) 48 that is newly added layer and under the application layer 42 in the U-Plane 41. The SAL 48 provides ciphering for user information from the application layer 42, and the ciphering algorithm and key for user information; also the SAL 48 is only used at the UE side, so the layering structure in network side is unchanged.

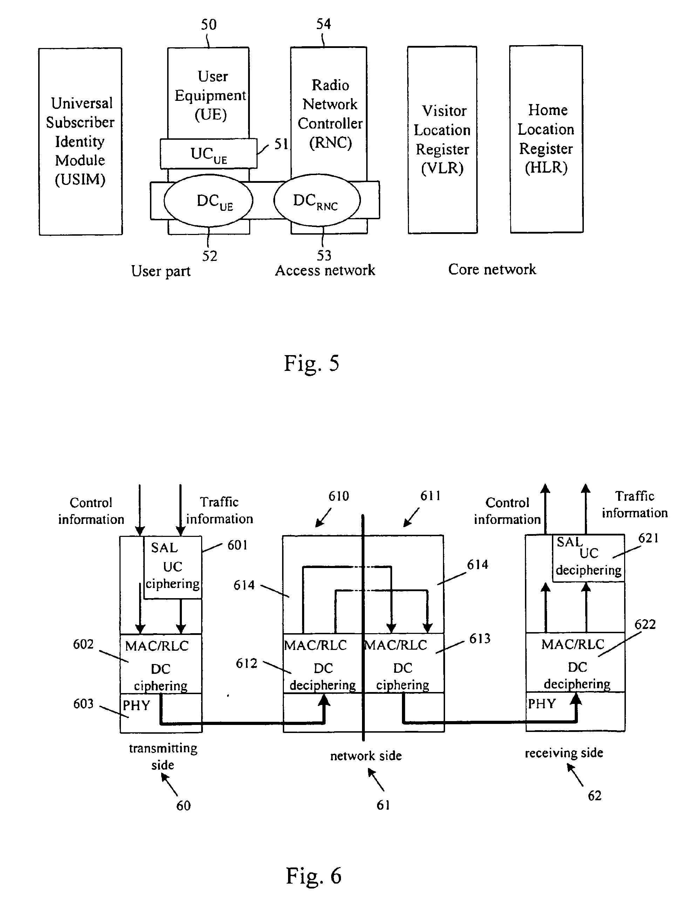

Fig. 5 shows a location diagram that implements user information ciphering at a UE and the data ciphering in a 3GPP network architecture. In this invention, the UE 50 provides user information ciphering function UC_{UE} 51 and data ciphering function DC_{UE} 52 at the same time, but the UC_{UE} is implemented in the SAL and the DC_{UE} is implemented in the RLC layer or MAC layer. The Radio Network Controller (RNC) 54 only implements the data ciphering function DC_{RNC} 53 at the RLC layer or MAC layer.

Fig. 6 shows an implementing method for user information ciphering at the UE side of a mobile telecommunication system. When a UE transmits information, the following steps are involved:
(1) At the transmitting side 60, the UE provides ciphering function for user information. Traffic information of user is ciphered through the SAL 601 and the SAL also provides the ciphering algorithm and key;
(2) The traffic information of user that is in ciphered state and control information of C-Plane are ciphered by Data Ciphering of the UE (DC_{UE}) at the RLC layer or MAC layer 602;
(3) Above ciphered information is sent to the network side 61 after having been processed at the PHY layer 603;
(4) At the network side 61, the RNC 610 that is correspondent to the transmitting side 60 deciphers the ciphered information with the DC_{RNC} of the RNC at the RLC layer or MAC layer 612, and after that the control information of C-Plane is deciphered but the traffic information of user still exists confidentiality;
(5) Through the core network 614, the traffic information of user that is in ciphered state and the control information of C-Plane are transmitted to the RNC 611 of the network side 61 corresponding to the receiving side 62; the traffic information of user which still exists confidentiality and the control information of C-Plane are ciphered with DC_{RNC} of the RNC at the RLC layer or MAC layer 613 of the RNC 611 and then they are sent to the receiving side 62.
(6) At the receiving side 62, the UE deciphers them with the DC_{UE} of the UE at the RLC layer or MAC layer 622, after that the C-Plane control information is completely deciphered but the U-Plane user traffic information is still in a confidentiality state;
(7) The traffic information of use that is in ciphered state is deciphered at the SAL 621, and recovered to the original information.

## Claims

1. A network structure that is suitable for ciphering at a user equipment (UE) of a mobile telecommunication system is divided into two planes: a User Plane and a Control Plane, at vertical direction;
layering structure of said Control Plane, C-plane, includes: an application layer, a Calling Control and Mobile Management layer for a non-access layering; and a Radio Resource Control layer, a Radio Link Control layer, a Medium Access Control layer and a Physical layer for an access layering;
layering structure of said User Plane includes: the application layer, the Radio Link Control layer, the Medium Access Control layer, the Physical layer; **characterised in that**
the layering structure of said User Plane further includes a Security Application Layer that is a newly added layer under said application layer and used to make ciphering for user information coming from said application layer, and said Security Application Layer is only used at the user equipment UE side.

2. The network structure according to Claim 1, said Security Application Layer comprises ciphering algorithms and keys for encrypting user information.

3. A method that is suitable for ciphering at a user equipment (UE) of a mobile telecommunication system, comprising the steps :
A. at transmitting side, ciphering traffic information of user at a Security Application Layer that is a newly added layer under the application layer that provides ciphering algorithms and keys to get first level ciphered traffic information of user;
B. making ciphering and deciphering at a Radio Link Control layer or a Medium Access Control layer for control information and said first level ciphered traffic information of user;
C. at receiving side, deciphering said first level ciphered traffic information of user at said Security Application Layer to recover original information.

4. The method according to Claim 3, wherein said Step B further comprising:
B1, with existing Data Ciphering in said user equipment (UE) at said Radio Link Control layer or Medium Access Control layer, ciphering the control information of C-Plane and the first level ciphered traffic information of user to get second level ciphered traffic information;
B2, sending the ciphered control information of C-Plane and the second level ciphered traffic information of user to network side after processing at a Physical layer;
B3, with Data Ciphering of a Radio Network Controller at the network side corresponding to the transmitting side, deciphering the ciphered control information of C-Plane and the second level ciphered traffic information of user by the Radio Network Controller at said Medium Access Control layer or said Radio Link Control layer;
B4, sending the control information of said C-Plane and the first level ciphered traffic information of user to a Radio Network Controller at the network side corresponding to the receiving side through core network, and
with Data Ciphering of the Radio Network Controller, ciphering the control information of said C-Plane and the first level ciphered traffic information of user to get second level ciphered traffic information by the Radio Network Controller at said Radio Link Control layer or Medium Access Control layer, and then sending them to corresponding receiving side;
B5, with Data Ciphering of a user equipment (UE) at receiving side, deciphering the ciphered control information of said C-Plane and the second level ciphered traffic information of user in step of B4 by the user equipment (UE) at the Radio Link Control layer or Medium Access Control layer.

## Patentansprüche

1. Netzwerkstruktur, die zum Chiffrieren eines Mobilfunk-Telekommunikationssystems in einer Benutzereinrichtung (UE) geeignet ist und die in vertikaler Richtung in zwei Ebenen unterteilt ist: eine Benutzerebene und eine Steuerungsebene; wobei
eine Schichtstruktur der Steuerungsebene, C-Ebene, aufweist: eine Anwendungsschicht, eine Verbindungssteuerungs- und Mobilverwaltungsschicht als Nichtzugriffsschichtaufbau; und eine Funkressourcensteuerungsschicht, eine Funkverbindungssteuerungsschicht, eine Medienzugriffssteuerungsschicht und eine physikalische Schicht als Zugriffsschichtaufbau;
eine Schichtstruktur der Benutzerebene aufweist: die Anwendungsschicht, die Funkverbindungssteuerungsschicht, die Medienzugriffssteuerungsschicht, die physikalische Schicht;
**dadurch gekennzeichnet, daß**
die Schichtstruktur der Benutzerebene ferner eine Sicherheitsanwendungsschicht aufweist, die eine neu hinzugefügte Schicht unter der Anwendungsschicht ist und verwendet wird, um eine Chiffrierung für Anwenderinformation durchzuführen, die aus der Anwendungsschicht kommt, und die Sicherheitsanwendungsschicht nur auf der Benutzereinrichtungsseite, UE-Seite, verwendet wird.

2. Netzwerkstruktur nach Anspruch 1, wobei die Sicherheitsanwendungsschicht Chiffrieralgorithmen und -schlüssel zur Verschlüsselung von Benutzerinformation aufweist.

3. Verfahren, das zur Chiffrierung in einer Benutzereinrichtung (UE) eines Mobilfunk-Telekommunikationssystems geeignet ist und das die folgenden Schritte umfaßt:
A. auf der Sendeseite, Chiffrieren von Verkehrsinformation des Benutzers in der Sicherheitsanwendungsschicht, die eine neu hinzugefügte Schicht unter der Anwendungsschicht ist und die Chiffrieralgorithmen und -schlüssel bereitstellt, um erstgradig chiffrierte Verkehrsinformation des Benutzers zu erhalten;
B. Durchführen von Chiffrierung und Dechiffrierung in einer Funkverbindüngssteuerungsschicht oder einer Medienzugriffssteuerungsschicht für Steuerungsinformation und die erstgradig chiffrierte Verkehrsinformation des Benutzers;
C. auf der Empfangsseite, Dechiffrieren der erstgradig chiffrierten Verkehrsinformation des Benutzers in der Sicherheitsanwendungsschicht, um ursprüngliche Information wiederzugewinnen.

4. Verfahren nach Anspruch 3, wobei Schritt B ferner umfaßt:
B1. bei bestehender Datenchiffrierung in der Benutzereinrichtung (UE) in der Funkverbindungssteuerungsschicht oder der Medienzugriffssteuerungsschicht, Chiffrieren der Steuerungsinformation der C-Ebene und der erstgradig chiffrierten Verkehrsinformation des Benutzers, um zweitgradig chiffrierte Verkehrsinformation zu erhalten;
B2. Senden der chiffrierten Steuerungsinformation der C-Ebene und der zweitgradig chiffrierten Verkehrsinformation des Benutzers an die Netzwerkseite nach Verarbeitung in einer physikalischen Schicht;
B3. bei Datenchiffrierung des Funknetzwerkcontrollers auf der Netzwerkseite, die der Sendeseite entspricht, Dechiffrieren der chiffrierten Steuerungsinformation der C-Ebene und der zweitgradig chiffrierten Verkehrsinformation des Benutzers durch den Funknetzwerkcontroller in der Medienzugriffssteuerungsschicht oder der Funkverbindungssteuerungsschicht;
B4. Senden der Steuerungsinformation der C-Ebene und der erstgradig chiffrierten Verkehrsinformation des Benutzers an den Funknetzwerkcontroller auf der Netzwerkseite, die der Empfangsseite entspricht, durch ein Kemnetzwerk, und
bei Datenchiffrierung des Funknetzwerkcontrollers, Chiffrieren der Steuerungsinformation der C-Ebene und der erstgradig chiffrierten Verkehrsinformation des Benutzers, um zweitgradig chiffrierte Verkehrsinformation zu erhalten, durch den Funknetzwerkcontroller in der Funkverbindungssteuerungsschicht oder Medienzugriffssteuerungsschicht und anschließendes Senden derselben an die entsprechende Empfangsseite;
B5. bei Datenchiffrierung einer Benutzereinrichtung (UE) auf der Empfangsseite, Dechiffrieren der chiffrierten Steuerungsinformation der C-Ebene und der zweitgradig chiffrierten Verkehrsinformation des Benutzers im Schritt B4 durch die Benutzereinrichtung (UE) in der Funkverbindungssteuerungsschicht oder der Medienzugriffssteuerungsschicht.

## Revendications

1. Structure de réseau qui convient pour un chiffrage au niveau d'un équipement d'utilisateur (UE) d'un système de télécommunication mobile et qui est divisée en eux plans selon une direction verticale: un Plan d'Utilisateur et un Plan de Commande;
une structure en couches dudit Plan de Commande, soit le Plan C, inclut: une couche d'application, une couche de Commande d'Appel et de Gestion de Mobile pour une mise en couches de non accès; et une couche de Commande de Ressource Radio, une couche de Commande de Liaison Radio, une couche de Commande d'Accès au Support et une couche Physique pour une mise en couches d'accès;
une structure en couches dudit Plan d'Utilisateur inclut: la couche d'application, la couche de Commande de Liaison Radio, la couche de Commande d'Accès au Support, la Couche Physique,
**caractérisée en ce que**:
la structure en couches dudit Plan d'Utilisateur inclut en outre une couche d'Application de Sécurité qui est une couche nouvellement additionnée sous ladite couche d'application et qui est utilisée pour réaliser un chiffrage pour une information d'utilisateur arrivant depuis ladite couche d'application, et ladite couche d'Application de Sécurité est seulement utilisée au niveau du côté de l'équipement d'utilisateur UE.

2. Structure de réseau selon la revendication 1, ladite couche d'Application de Sécurité comprenant des algorithmes de chiffrage et des clés pour crypter une information d'utilisateur.

3. Procédé qui convient pour chiffrer au niveau d'un équipement d'utilisateur (UE) un système de télécommunication mobile, comprenant les étapes de:
A. au niveau d'un côté d'émission, chiffrage d'une information de trafic d'utilisateur au niveau d'une couche d'Application de Sécurité qui est une couche nouvellement additionnée sous la couche d'application et qui fournit des algorithmes de chiffrage et des clés pour obtenir une information d'utilisateur de trafic chiffrée de premier niveau;
B. réalisation d'un chiffrage et d'un déchiffrage au niveau d'une couche de Commande de Liaison Radio ou d'une couche de Commande d'Accès au Support pour une information de commande et ladite information d'utilisateur de trafic chiffrée de premier niveau;
C. au niveau du côté de réception, déchiffrage de ladite information d'utilisateur de trafic chiffrée de premier niveau au niveau de ladite couche d'Application de Sécurité afin de restaurer une information originale.

4. Procédé selon la revendication 3, dans lequel ladite étape B comprend en outre:
B1. à l'aide d'un Chiffrage de Données existant dans ledit équipement d'utilisateur (UE) au niveau de ladite couche de Commande de Liaison Radio ou de ladite couche de Commande d'Accès au Support, le chiffrage de l'information de commande du Plan C et de l'information d'utilisateur de trafic chiffrée de premier niveau afin d'obtenir une information de trafic chiffrée de second niveau;
B2. l'envoi de l'information de commande chiffrée de Plan C et de l'information d'utilisateur de trafic chiffrée de second niveau à un côté de réseau après traitement au niveau d'une couche physique;
B3. à l'aide d'un Chiffrage de Données d'un Contrôleur de Réseau Radio au niveau du côté de réseau correspondant au côté d'émission, le déchiffrage de l'information de commande chiffrée de Plan C et de l'information d'utilisateur de trafic chiffrée de second niveau par le Contrôleur de Réseau Radio au niveau de ladite couche de Commande d'Accès au Support ou de ladite couche de Commande de Liaison Radio;
B4. l'envoi de l'information de commande dudit Plan C et de l'information d'utilisateur de trafic chiffrée de premier niveau à un Contrôleur de Réseau Radio au niveau du côté de réseau en correspondance avec le côté de réception par l'intermédiaire d'un réseau de noyau, et
à l'aide d'un Chiffrage de Données du Contrôleur de Réseau Radio, le chiffrage de l'information de commande dudit Plan C et de l'information d'utilisateur de trafic chiffrée de premier niveau afin d'obtenir une information de trafic chiffrée de second niveau par le Contrôleur de Réseau Radio au niveau de ladite couche de Commande de Liaison Radio ou de ladite couche de Commande d'Accès au Support puis leur envoi sur le côté de réception correspondant;
B5. à l'aide d'un Chiffrage de Données d'un équipement d'utilisateur (UE) au niveau du côté de réception, le déchiffrage de l'information de commande chiffrée dudit Plan C et de l'information d'utilisateur de trafic chiffrée de second niveau au niveau de l'étape B4 au moyen de l'équipement d'utilisateur (UE) au niveau de la couche de Commande de Liaison Radio ou de la couche de Commande d'Accès au Support.
